# NEUE EUROPÄISCHE PATENTSCHRIFT

(11) **EP 1 356 204 B2**
(45) Veröffentlichungstag und Bekanntmachung des Hinweises auf die Entscheidung über den Einspruch: **02.09.2015**
(45) Hinweis auf die Patenterteilung: 09.07.2008
(21) Anmeldenummer: 02715429.3
(22) Anmeldetag: 15.01.2002
(51) Int. Cl.: F03D 1/06, F03D 11/00

(54) **WINDENERGIEANLAGE MIT EINER HOHLWELLE FÜR ROTORNABE UND GENERATOR**
WIND ENERGY UNIT COMPRISING A HOLLOW SHAFT FOR ROTOR HUB AND GENERATOR
EOLIENNE POURVUE D'UN ARBRE CREUX POUR LE MOYEU DE ROTOR ET LE GENERATEUR

(30) Priorität: 19.01.2001 DE 10102255
(43) Veröffentlichungstag der Anmeldung: 29.10.2003
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2002/000307
(87) Internationale Veröffentlichungsnummer: WO 2002/057624

(56) Entgegenhaltungen:
- EP-A- 0 037 002
- WO-A-96/30647
- DD-A- 261 395
- DE-A- 4 402 184
- FR-A- 2 810 374

## Beschreibung

Die Erfindung betrifft eine Windenergieanlage mit einem an der Spitze eines Turms zu befestigenden Maschinenträger, der einerseits den statischen Teil eines elektrischen Generators hält und andererseits dessen drehenden Teil sowie eine Rotorblätter tragende Nabe eines Rotors lagert, wobei die Rotornabe und das drehende Generatorteil an einer gemeinsamen Hohlwelle befestigt sind, welche mittels eines einzigen, auch Momente aufnehmenden Lagers auf einer Achshülse gelagert ist, die am Maschinenträger angebracht ist.

Aus der DD 261 395 A1 ist eine Windenergieanlage bekannt, bei der sowohl die Achshülse als auch die Hohlwelle aus zwei in Achsrichtung beabstandeten zylindrischen Abschnitten stark unterschiedlichen Durchmessers besteht, welche jeweils durch einen konischen Abschnitt miteinander verbunden sind. Beide zylindrischen Teile der Achshülse und der Hohlwelle sind durch je ein Wälzlager miteinander verbunden, und zwar der zylindrische Abschnitt größeren Durchmessers durch ein Schrägrollenlager nahe dem Maschinenträger und der zylindrische Abschnitt kleineren Durchmessers in erheblichem Abstand davon auf der anderen Seite der Befestigung/Lagerung der Rotorblätter an der Rotornabe.

Eine Lagerungsart mit einem Einzellager ist aus der DE 44 02 184 A1 bekannt. Hierbei wird ein einzelnes Rillenkugellager im gemeinsamen Massenschwerpunkt des drehbaren Generatorteils und des Rotors angeordnet. Damit wird zwar erreicht, dass das Einzellager keine Momente aufnehmen muss und daher vergleichsweise verschleißarm laufen kann, jedoch weist diese Anordnung den Nachteil auf, dass die Luftspaltführung im Generator nicht exakt ist und daher ein größerer Luftspalt eingestellt werden muss. Dadurch wird der Wirkungsgrad des Generators verringert.

Dem will die Erfindung abhelfen. Sie besteht bei der eingangs geschilderten Ausbildung und Anordnung darin, dass der drehende Generatorteil radial im wesentlichen mit dem Lager fluchtet. Auf diese Weise verringert sich nicht nur die axiale Länge der Achshülse und damit ihr Gewicht beträchtlich, sondern das Lager kann ferner alle, auch in ihrer Richtung wechselnde Momente abtragen, welche um quer zur Wellenachse verlaufende Achsen auftreten, ohne die relative Lage des Generator-Rotors gegenüber dem Generator-Stator über ein kritisches Maß - der Generatorspalt darf auch bei modernen Anlagen mit einem Generator-Durchmesser von 4000 mm eine Breite von 3 mm nicht überschreiten - hinaus zu verändern. Die Momentenbelastung des Lagers ist im übrigen durch das radiale Fluchten des drehenden Generatorteils mit dem Lager verringert. Außerdem können die bei der Rotation des Generator-Rotors auftretenden Fliehkräfte vom Lager besonders problemlos aufgenommen werden, und die Betriebssicherheit des Generators wird vergrößert.

Aus der AT 403 189 B ist es zwar bekannt, die Rotornabe einer Windenergieanlage an einer Hohlwelle zu befestigen, die mit einem einzigen Wälzlager am Maschinengehäuse befestigt ist. Dort ist jedoch die Hohlwelle mit einer Welle verkeilt, die mit einem auf der gegenüberliegenden Seite des Turmes angeordneten, also axial entfernten Generator gekuppelt ist. Die der Erfindung zu Grunde liegende Problematik tritt also dort nicht auf. Ähnliches gilt für die ältere, aber nicht vorveröffentlichte FR 2 810 374 A1, bei der ein Generator mit radialen Spalten vorgesehen ist und die drehenden Generatorteile in ihrer Gesamtheit nicht mit dem einzigen Wälzlager fluchten.

WO-A-01/98655 nimmt die Priorität der genannten FR-A-2810374 in Anspruch und stellt Stand der Technik im Sinne vom Artikel 54(3), EPÜ dar.

Vorzugsweise ist das Lager ein zweireihiges Schrägrollenlager mit winklig zueinander angeordneten Rollenreihen. Dabei ist insbesondere vorgesehen, dass jede Rollenreihe einen Winkel von etwa 45° mit der Achse der Achshülse und Hohlwelle einschließt. Dadurch wird ein Optimum an Momentenaufnahme durch das Lager erreicht. Dieses wird zweckmäßig nächst dem Maschinenträger angeordnet, wobei die axiale Länge der Achshülse im wesentlichen auf die Breite des Lagers beschränkt ist. Größe und Gewicht der an der Turmspitze zu montierenden Elemente der Windenergieanlage sind auf diese Weise wesentlich reduziert.

Die Zeichnung veranschaulicht die Erfindung an einem Ausführungsbeispiel. Darin zeigt:

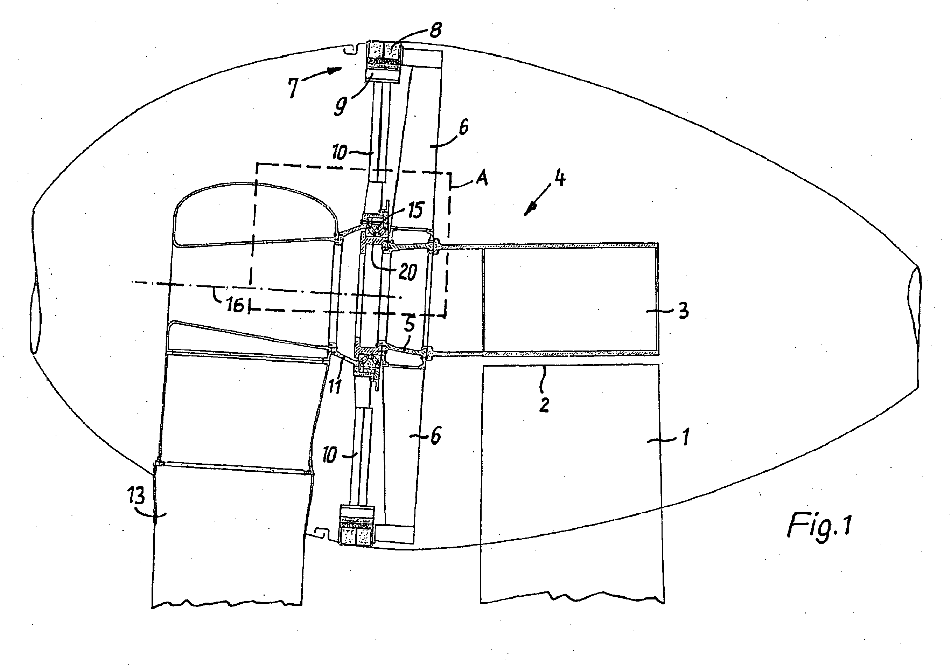

- Fig. 1: einen teilweise schematisierten Längsschnitt durch eine Windenergieanlage an der Spitze des sie tragenden Turmes; und

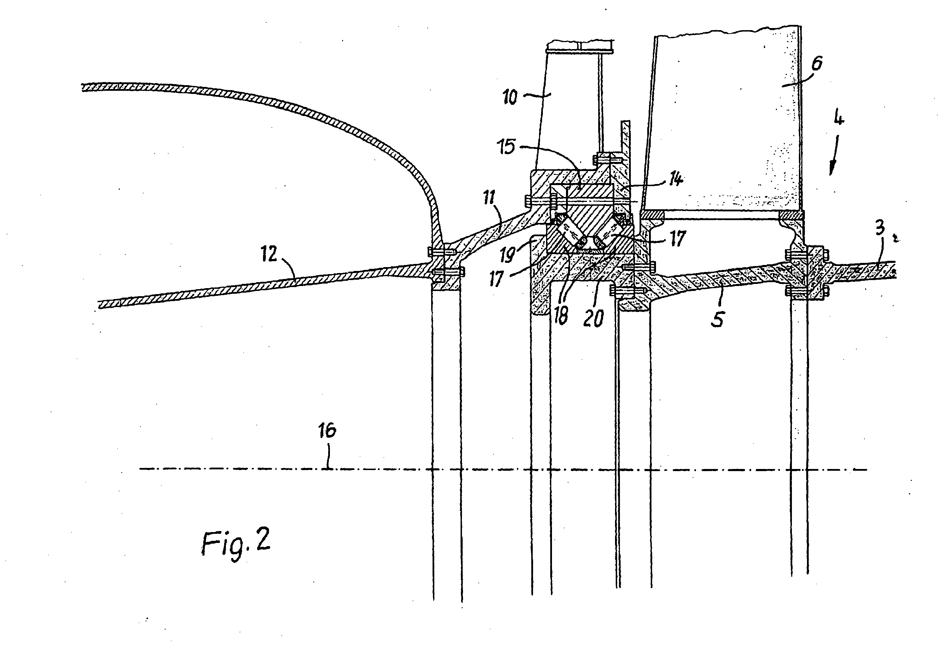

- Fig. 2: eine vergrößerte Ausschnittsdarstellung des Lagers in Fig. 1 (Ausschnitt A).

Am oberen Ende (Spitze 2) eines Turmes 1 ist in üblicher Weise das Gehäuse 3 eines im Ganzen mit 4 bezeichneten Maschinenträgers befestigt. An dessen vorderem Ende ist der zentrale Ring 5 eines sternförmigen Trägers 6 für den Stator 8 eines insgesamt mit 7 bezeichneten elektrischen Generators befestigt; sein Läufer oder Rotor 9 ist mit engem Spaltabstand konzentrisch dazu angeordnet.

Der Rotor 9 des Generators 7 wird von einem ebenfalls im wesentlichen sternförmigen Träger 10 gehalten, welcher an einer Hohlwelle 11 befestigt ist, an der koaxial die Nabe 12 des Rotors mit den Rotorblättern 13 angeflanscht ist.

Gemeinsam mit einem Deckelflansch 14 umschließt die - entsprechend abgekröpfte - Hohlwelle 11 den Außenring 15 eines Schrägrollenlagers mit zwei unter 45° zur Achse 16 (und damit unter 90° zueinander) geneigt angeordneten Rollenreihen 17. Der Innenring des Lagers wird von den Ringen 18 gebildet, die jeweils eine Rollenreihe 17 abstützen, und die von einem Ringbund 19 einer Achshülse 20 gehalten werden, welche ihrerseits am zentralen Ring 5 angeflanscht und dadurch am Maschinengehäuse 3 befestigt ist. Die axiale Länge der Achshülse 20 übersteigt die Breite des aus den Ringen 15, 18 sowie den Rollenreihen 17 bestehenden Schrägrollenlagers nur wenig.

## Patentansprüche

1. Windenergieanlage mit einem an der Spitze eines Turmes (1) zu befestigenden Maschinenträger (4), der einerseits den statischen Teil (8) eines elektrischen Generators (7) hält und andererseits dessen drehenden Teil (9) sowie eine Rotorblätter (13) tragende Nabe (12) eines Rotors lagert, wobei die Rotornabe (12) und der drehende Generatorteil (9) an einer gemeinsamen Hohlwelle (11) befestigt sind, welche mittels eines einzigen, auch Momente aufnehmenden Wälzlagers (15, 17, 18) auf einer Achshülse (20) gelagert ist,
die am Maschinenträger (4) angebracht ist,
und wobei der drehende Generatorteil (9) vom statischen Generatorteil (8) durch einen achsparallelen Luftspalt getrennt ist,
**dadurch gekennzeichnet, dass** der drehende Generatorteil (9) mit einem im wesentlichen sternförmigen Träger (10) am Außenring (15) des Lagers befestigt ist, nämlich über einen der Lagerung dienenden Teil der Hohlwelle (11), und im wesentlichen mit dem Lager (15, 17, 18) fluchtet.

2. Windenergieanlage nach Anspruch 1,
**dadurch gekennzeichnet, dass** das Lager (15,17,18) nächst dem Maschinenträger (4) angeordnet und die axiale Länge der Achshülse (20) im wesentlichen auf die Breite des Lagers beschränkt ist.

3. Windenergieanlage nach Anspruch 1 oder 2,
**dadurch gekennzeichnet, dass** das Lager ein zweireihiges Schrägrollenlager (15, 18) mit winklig zueinander angeordneten Rollenreihen (17) ist.

4. Windenergieanlage nach Anspruch 3,
**dadurch gekennzeichnet, dass** jede Rollenreihe (17) einen Winkel von etwa 45° mit der Achse (16) der Achshülse (20) und der Hohlwelle (11) einschließt.

## Claims

1. Wind power installation comprising a machine carrier (4) which is to be fastened to the top of a tower (1) and which on the one hand holds the static part (8) of an electrical generator (7) and on the other hand supports the rotating part (9) thereof as well as a hub (12) of a rotor which carries rotor blades (13),
wherein the rotor hub (12) and the rotating part (9) of the generator are fastened to a common hollow shaft (11) which is supported, by means of a single roller bearing (15, 17, 18) which also absorbs torques, on an axle sleeve (20) mounted on the machine carrier (4), and wherein the rotating part (9) of the generator is separated from the static part (8) of the generator by an axially parallel air gap,
**characterised in that** the rotating part (9) of the generator is fastened to the outer ring (15) of the bearing by a substantially star-like carrier (10), that is to say, by means of a portion of the hollow shaft (11) acting as a support, and is substantially in alignment with the bearing (15, 17, 18).

2. Wind power installation according to claim 1,
**characterised in that** the bearing (15, 17, 18) is arranged next to the machine carrier (4) and the axial length of the axle sleeve (20) is substantially limited to the width of the bearing.

3. Wind power installation according to claim 1 or 2,
**characterised in that** the bearing is a double-row angular contact roller bearing (15, 18) with rows (17) of rollers arranged at an angle to each other.

4. Wind power installation according to claim 3,
**characterised in that** each row (17) of rollers includes an angle of about 45° with the axis (16) of the axle sleeve (20) and the hollow shaft (11).

## Revendications

1. Eolienne avec un support de machine (4) à fixer au sommet d'un pylône (1) et supportant d'une part la partie statique (8) d'un générateur électrique (7), tout en assurant d'autre part le montage de palier de la partie tournante (9) de ce générateur ainsi que du moyeu (12) d'un rotor, qui porte des pales de rotor (13),
le moyeu de rotor (12) et la partie tournante (9) du générateur étant fixés sur un arbre creux (11) commun, qui est monté à l'aide d'un seul palier à roulement (15, 17, 18) absorbant également des moments, sur un fourreau d'axe (20) placé sur le support de machine (4),
et la partie tournante (9) du générateur étant séparée de la partie statique (8) du générateur par un entrefer parallèle à l'axe,
**caractérisée en ce que** la partie tournante (9) du générateur est fixée à la bague extérieure (15) du roulement par un support (10) sensiblement en forme d'étoile, plus précisément par l'intermédiaire d'une partie de l'arbre creux (11) servant au montage, et est sensiblement alignée avec le roulement (15, 17, 18).

2. Eolienne selon la revendication 1,
**caractérisée en ce que** le roulement (15, 17, 18) est agencé très près du support de machine (4), et la longueur axiale du fourreau d'axe (20) est limitée pour l'essentiel à la largeur du roulement.

3. Eolienne selon la revendication 1 ou 2,
**caractérisée en ce que** le roulement est un roulement à rouleaux obliques à deux rangées (15, 18) avec des rangées de rouleaux (17) agencées de manière angulaire l'une par rapport à l'autre.

4. Eolienne selon la revendication 3,
**caractérisée en ce que** chaque rangée de rouleaux (17) forme un angle d'environ 45° avec l'axe (16) du fourreau d'axe (20) et de l'arbre creux (11).
